# EUROPEAN PATENT APPLICATION

(11) **EP 4 576 842 A1**
(43) Date of publication of application: **25.06.2025**
(21) Application number: 23858897.4
(22) Date of filing: 29.06.2023
(51) Int. Cl.: H04W 4/35, G06F 21/31

(54) **SHARED-DEVICE CONTROL METHOD, DEVICE, CLIENT, SERVER, AND STORAGE MEDIUM**

(30) Priority: 30.08.2022 CN 202211049556
(71) Applicant: GD Midea Air-Conditioning Equipment Co., Ltd., Foshan, Guangdong 528311 (CN)
(72) Inventor: YAN, Lin, Foshan, Guangdong 528311 (CN); LI, Yemeng, Foshan, Guangdong 528311 (CN)
(74) Representative: RGTH
(86) International application number: PCT/CN2023/104222
(87) International publication number: WO 2024/045859

(57) **Abstract**

The present application relates to the technical field of communication, and in particular to a method and a device for controlling a shared device, a client, a server and a storage medium The method includes: receiving a permission information table sent by a server; in response to receiving an operation instruction sent by a client, determining permission information corresponding to the client according to the permission information table; converting the permission information into a data model corresponding to the Matter protocol, and executing the operation instruction based on the converted permission information.

## Description

This application claims priority to Chinese Patent Application No. 202211049556.0, filed on August 30, 2024, the entire contents of which are incorporated herein by reference.

### TECHNICAL FIELD

The present application relates to the technical field of communication, and in particular to a method and a device for controlling a shared device, a client, a server and a storage medium.

### BACKGROUND

In recent years, the sharing economy has become a hot topic, and more and more products are being shared. Shared air conditioners are purchased through centralized procurement and installed in dormitories in multi-person residential places such as campuses and factories. Everyone in the dormitory can obtain the right to use the air conditioner (comprising usage time, controllable functions, etc.) through the operation platform after paying a certain fee according to the payment rules.

In the relevant technical scheme, the premise for the use of shared air conditioners is that the shared air conditioner and the server corresponding to the shared air conditioner are in communication connection, and the client of the shared air conditioner also needs to maintain a communication connection with the server, so that the user can control the shared air conditioner through the client.

However, this scheme relies on the cloud server for management when the air conditioner is in use. If the client cannot communicate with the server, the shared air conditioner cannot be used.

The above content is only used to assist in understanding the technical solution of the present application, and does not mean that the above content is recognized as prior art.

### SUMMARY

### TECHNICAL PROBLEM

The main purpose of the present application is to provide a method for controlling a shared device, aiming to solve the problem that how to control a shared device when a client cannot communicate with a server.

### TECHNICAL SOLUTION

To achieve the above purpose, the present application provides a method for controlling a shared device, applied to the shared device, comprising:
receiving a permission information table sent by a server;
in response to receiving an operation instruction sent by a client, determining permission information corresponding to the client according to the permission information table; and
converting the permission information into a data model corresponding to a Matter protocol, and executing the operation instruction based on converted permission information.

In an embodiment, the Matter protocol comprises a highest operation permission and a plurality of independent normal operation permissions of the shared device, and a control session is established between the shared device and at least one of the clients under the Matter protocol.

In an embodiment, before the step of receiving the permission information table sent by the server, the method comprises:
receiving a networking request sent by the client;
determining owner information of the client according to the networking request; and
sending the owner information to the server.

In order to achieve the above objective, the present application provides a method for controlling a shared device, applied to a client, comprising:
in response to receiving a control operation of the shared device, determining whether a control session is able to be established with the server;
in response to that the control session is not able to be established with the server, establishing a communication connection with the shared device based on a Matter protocol, and sending an operation instruction corresponding to the control operation of the shared device to the shared device; or
in response to that the control session is successfully established with the server, sending the operation instruction to the server.

In an embodiment, the step of determining whether the control session is able to be established with the server comprises:
sending a connection request to the server based on a preset frequency;
in response to that a connection success request fed back by the server is received within a preset time, determining that the control session is successfully established with the server; or
in response to that the connection success request fed back by the server is not received within a preset time, determining that the control session is not able to be established with the server.

In an embodiment, before the step of determining whether the control session is able to be established with the server, the method further comprises:
when establishing the control session with the shared device for a first time, sending a networking request to the shared device and sending a server application for permission to the server; and
receiving a permission information table generated and sent by the server according to the server application for permission.

In order to achieve the above objective, the present application provides a method for controlling a shared device, applied to a server, comprising:
in response to receiving an operation instruction sent by a client, determining permission information corresponding to the client according to a permission information table; and
converting the permission information into a data model corresponding to a Matter protocol, and sending a control instruction corresponding to the operation instruction to the shared device based on converted permission information, enabling the shared device to execute the operation instruction.

In an embodiment, after the step of determining the permission information corresponding to the client according to the permission information table, the method further comprises:
in response to that the permission information does not exist in the permission information table, receiving a server application for permission sent by the client;
based on the server application for permission, updating the permission information corresponding to the client in the permission information table; and
returning to the step of determining the permission information corresponding to the client according to the permission information table.

In an embodiment, before the step of determining the permission information corresponding to the client according to the permission information table, the method further comprises:
receiving owner information sent by the shared device;
generating the permission information table according to the owner information; and
sending the permission information table to the shared device and the client.

Besides, in order to achieve the above objective, the present application further provides a shared device, comprising: a memory; a processor, and a program for controlling the shared device stored in the memory and executable on the processor, wherein the program for controlling the shared device, when executed by the processor, implements the steps of the method for controlling the shared device as described above.

Besides, in order to achieve the above objective, the present application further provides a client, comprising: a memory, a processor, and a program for controlling the shared device stored in the memory and executable on the processor, and the program for controlling the shared device, when executed by the processor, implements the steps of the method for controlling the shared device as described above.

Besides, in order to achieve the above objective, the present application further provides a server, comprising: a memory, a processor, and a program for controlling the shared device stored in the memory and executable on the processor, and the program for controlling the shared device, when executed by the processor, implements the steps of the method for controlling the shared device as described above.

### TECHNICAL EFFECT

The embodiment of the present application provides a method and a device for controlling a shared device, a client, a server and a storage medium. The method comprises: receiving a permission information table sent by a server; in response to receiving an operation instruction sent by a client, determining the permission information corresponding to the client according to the permission information table; converting the permission information into a data model corresponding to the Matter protocol, and executing the operation instruction based on the converted permission information. By sending a permission information table to the shared device terminal, and establishing a Matter protocol on the shared device terminal, so that when the shared device receives an operation instruction sent by the client, the shared device can verify whether the client has control permission, and when it is determined that the client has control permission, the permission information is converted into a data model corresponding to the Matter protocol, so that the operation instruction is executed based on the converted permission information, thereby avoiding the phenomenon that the shared device cannot respond to the client's operation instruction in time when a network failure occurs on the client.

### BRIEF DESCRIPTION OF THE DRAWINGS

FIG. 1 is a schematic diagram of a hardware architecture of a shared device involved in an embodiment of the present application.
FIG. 2 is a schematic flowchart of a method for controlling a shared device according to a first embodiment of the present application.
FIG. 3 is a flowchart of a configuration of a permission information table of the method for controlling the shared device according to a first embodiment of the present application.
FIG. 4 is a diagram of a permission structure of the method for controlling the shared device according to a first embodiment of the present application.
FIG. 5 is a schematic diagram of a hardware architecture of a client involved in an embodiment of the present application.
FIG. 6 is a schematic flowchart of the method for controlling the shared device according to a second embodiment of the present application.
FIG. 7 is a schematic diagram of a hardware architecture of a server involved in an embodiment of the present application.
FIG. 8 is a schematic flowchart of the method for controlling the shared device according to a third embodiment of the present application.
FIG. 9 is an access flowchart of a shared system composed of the user client, shared device and server involved in the method for controlling the shared device of the present application.
FIG. 10 is a schematic flowchart of the method for controlling the shared device according to a fourth embodiment of the present application.
FIG. 11 is a schematic flowchart of a local area network communication between the user client and a device of the method for controlling the shared device according to a fourth embodiment of the present application.
FIG. 12 is a schematic flowchart of the method for controlling the shared device according to a fifth embodiment of the present application.
FIG. 13 is a schematic flowchart of a wide area network communication between the user client, the device and the server of the method for controlling the shared device according to a fourth embodiment of the present application.

The realization of the objective, functional characteristics, and advantages of the present application are further described with reference to the accompanying drawings and in conjunction with the embodiments.

### DETAILED DESCRIPTION OF THE EMBODIMENTS

In the present application, users can control shared devices through local area networks and wide area networks. The air conditioning device verifies the user's operation through the permission information table stored therein. Since the permission information table is stored locally, even without an external network, the user can still use the device correctly and effectively through the local area network.

In order to better understand the above technical solution, the exemplary embodiments of the present application will be described in more detail with reference to the accompanying drawings. Although the exemplary embodiments of the present application are shown in the accompanying drawings, it should be understood that the present application can be implemented in various forms and should not be limited by the embodiments described here. On the contrary, these embodiments are provided to enable a more thorough understanding of the present application and to fully convey the scope of the present application to those in the art.

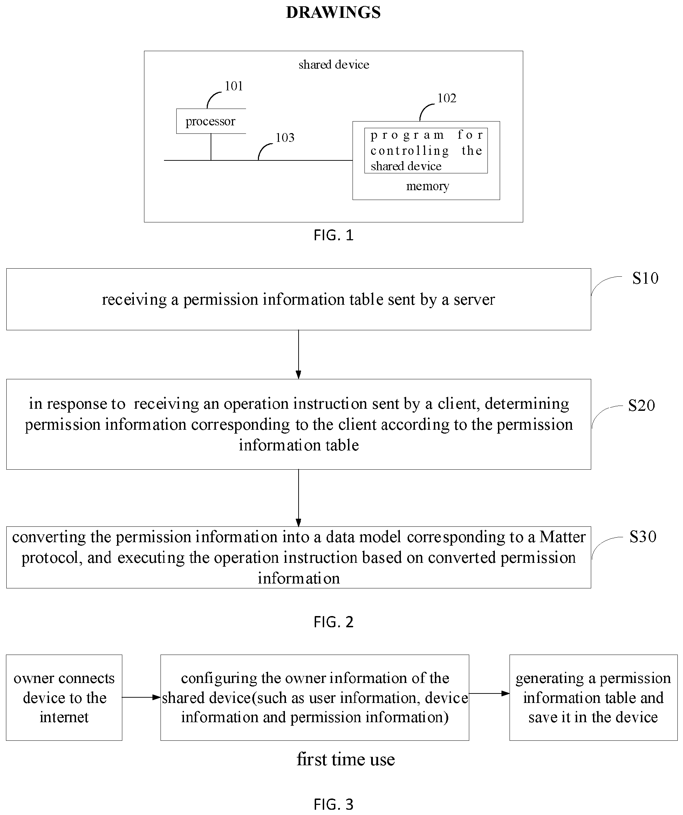

As an implementation scheme, the hardware architecture of the shared device can be shown in FIG. 1.

The solution of the embodiment involves the hardware architecture of the shared device, and the hardware architecture comprises: a processor 101, such as a CPU, a memory 102, and a communication bus 103. Among them, the communication bus 103 is used to realize the connection and communication between these components.

The memory 102 can be a high-speed RAM memory or a stable memory (nonvolatile memory), such as a disk memory. As shown in FIG. 1, the memory 102 as a computer-readable storage medium may comprise a program for controlling a shared device. The processor 101 can call the program for controlling the shared device stored in the memory 102 and perform the following operations:
receiving a permission information table sent by the server;
in response to receiving an operation instruction sent by the client, determining permission information corresponding to the client according to the permission information table; and
converting the permission information into a data model corresponding to the Matter protocol, and executing the operation instruction based on converted permission information.

In an embodiment, the processor 101 can call the program for controlling the shared device stored in the memory 102, and perform the following operations:
receiving a networking request sent by the client;
determining owner information of the client according to the networking request; and
sending the owner information to the server.

Based on the hardware architecture of the above-mentioned shared device based on communication technology, a first embodiment of the method for controlling the shared device of the present application is provided.

As shown in FIG. 2, in the first embodiment, the method for controlling the shared device comprises the following steps:
Step S10, receiving a permission information table sent by a server.

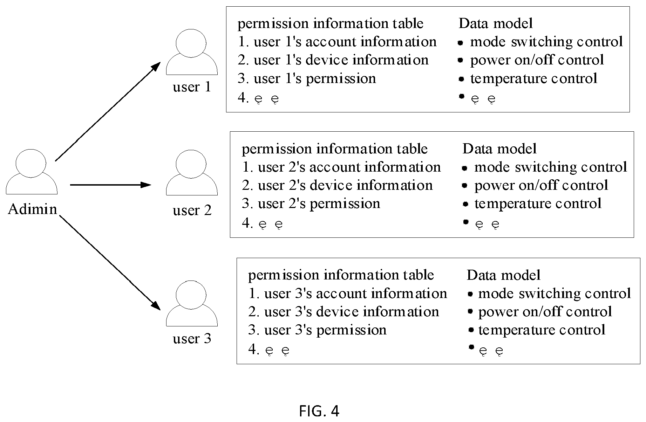

In an embodiment, as shown in FIG. 3, when the shared device is used for the first time, it is necessary to configure the owner information of the shared device (for example, the user information, device information and permission information of the operator of the shared device, etc.). As shown in FIG. 4, for the owner of the shared device (i.e., the administrator Admin), he has the highest management permission (i.e., the administrator permission) of the shared device. The user with the highest management permission (i.e., the operator) can assign the permission information table (Access Control) to other users (i.e., clients) user1, user2, user3... The permission information table comprises information such as the user's account information, device information and usage permission. Due to the existence of the permission information table, the control permission between different users is independent of each other. The permission information table is stored in the device, client, and server respectively. After the initial configuration is completed, the owner obtains the highest management permission of the air conditioner. Other users need to apply to the client when they want to use the shared device. When the shared device is in the networked state, the permission information table can be updated synchronously with the client and the server.

In some embodiments, when other users use the shared device, they need to apply to the owner for the control permission of the shared device according to certain rules.

Step S20, in response to receiving an operation instruction sent by a client, determining permission information corresponding to the client according to the permission information table.

In an embodiment, when receiving the operation instruction sent by the client, the operation instruction contains the device identification of the client and the user information corresponding to the client. The shared device verifies whether there is a device identification and/or user information corresponding to the client in the table according to the permission information table. When the device identification and/or user information corresponding to the client is verified in the permission information table, it is determined that the client has the control permission of the shared device.

It should be noted that when a control session is not established between the client and the server, the operation instruction will be sent to the shared device in this embodiment. Since no control session is established between the client and the server, it is impossible to send a message to the server in time, and the shared device may not respond to the operation instruction input by the client in time, resulting in a decrease in the user experience of the shared device. However, since the shared device and the client both store a permission information table, when a control session is not established between the client and the server, based on the permission information table between the two and the Matter protocol corresponding to the table, a local area network that does not require server intervention can be built between the client and the shared device. The client and the shared device communicate and connect based on the local area network, so that even if a control session is not established between the client and the server, the shared device can be controlled.

Step S30, converting the permission information into a data model corresponding to a Matter protocol, and executing the operation instruction based on converted permission information.

After determining that the client has the control permission of the shared device, the permission information is converted into a data model corresponding to the Matter protocol. The converted permission information after the data model conversion comprises the operation permission of various operations in the shared device (such as mode switching control, power on/off control, etc.).

In an embodiment, the Matter protocol is an application protocol built on IPv6, which comprises a highest operation permission and a plurality of independent normal operation permissions of the shared device. Under the Matter protocol, a control session is established between the shared device and at least one of the clients, which has at least the following characteristics:
1. Cross-device connection. Devices that comply with the Matter protocol can access different ecological networks at the same time. For example, lighting lamps that comply with the Matter protocol standard can access both smart devices of the IOS system and smart devices of the Android system at the same time.
2. Local operation. When a client that complies with the Matter protocol is disconnected from the server or the transmission is unstable, the client can directly communicate and connect with the shared device that complies with the Matter protocol.
3. Cross-protocol connection. Through Border Routers (BR), different connection protocols can be bridged. For example, the same network can support Thread protocol, Zwave protocol, Bluetooth Mesh protocol, etc.
4. Protocol layering. Multiple Fabrics in the Matter protocol can enable devices connected to Matter protocol to have multiple administrators, and the permissions of multiple administrators are isolated and do not affect each other.

In the solution provided by the embodiment, by sending a permission information table to the shared device terminal, the Matter protocol is established on the shared device terminal, so that when the shared device receives the operation instruction sent by the client, the shared device can verify whether the client has the control permission, and when it is determined that the client has the control permission, the permission information is converted into a data model corresponding to the Matter protocol, so that the operation instruction is executed based on the converted permission information, avoiding the phenomenon that the shared device cannot respond to the client's operation instruction in time when a network failure occurs on the client.

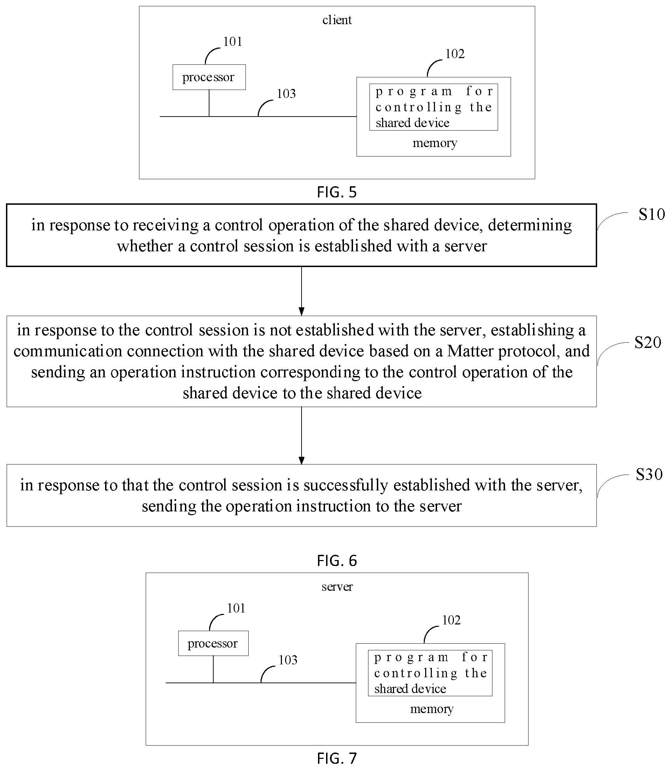

As an implementation solution, the hardware architecture of the client can be shown in FIG. 5.

The solution of the embodiment involves the hardware architecture of the client, which comprises: a processor 101, such as a CPU, a memory 102, and a communication bus 103. Among them, the communication bus 103 is used to realize the connection and communication between these components.

The memory 102 can be a high-speed RAM memory or a stable memory (nonvolatile memory), such as a disk memory. As shown in FIG. 5, the memory 102 as a computer-readable storage medium can comprise a program for controlling a shared device. The processor 101 can call the program for controlling the shared device stored in the memory 102, and perform the following operations:
in response to receiving a control operation of the shared device, determining whether a control session can be established with a server;
in response to that the control session cannot be established with the server, establishing a communication connection with the shared device based on a Matter protocol, and sending an operation instruction corresponding to the control operation of the shared device to the shared device; or
in response to that the control session is successfully established with the server, sending the operation instruction to the server.

In an embodiment, the processor 101 can call the program for controlling the shared device stored in the memory 102, and perform the following operations:
sending a connection request to the server based on a preset frequency;
in response to that a connection success request fed back by the server is received within a preset time, determining that the control session is successfully established with the server; or
in response to that the connection success request fed back by the server is not received within a preset time, determining that the control session cannot be established with the server.

In an embodiment, the processor 101 can call the program for controlling the shared device stored in the memory 102, and perform the following operations:
when establishing the control session with the shared device for a first time, sending a networking request to the shared device and sending a server application for permission to the server; and
receiving a permission information table generated and sent by the server according to the server application for permission.

Based on the hardware architecture of the client based on the communication technology, a second embodiment of the method for controlling the shared device of the present application is provided.

As shown in FIG. 6, in the second embodiment, the method for controlling the shared device comprises the following steps:
Step S10, in response to receiving a control operation of the shared device, determining whether a control session can be established with a server.

In an embodiment, in response to receiving a control operation of the shared device input by the user, the client determines whether a control session can be established with the server. If the control session cannot be established with the server, it means that the client is not connected to the network or the network connection is poor; if the control session can be successfully established with the server, it means that the client is connected to the network and/or the network connection is good.

In an embodiment, the method for determining whether the control session can be established may be to send a connection request to the server based on a preset frequency. If a connection success request fed back by the server is received within a preset time, it is determined that the client successfully establishes a control session with the server; if a connection success request fed back by the server is not received within a preset time, it is determined that the establishment of a control session with the server fails.

Exemplarily, when the user inputs a control operation of the shared device, the preset frequency is set to once every 5 seconds, and the client initiates a connection request to the server every 5 seconds. If a connection success request fed back by the client is not received within a preset time of 15 seconds, the connection request is marked as DOWN, that is, the establishment of a control session with the server fails.

Step S20, in response to that the control session cannot be established with the server, establishing a communication connection with the shared device based on a Matter protocol, and sending an operation instruction corresponding to the control operation of the shared device to the shared device.

In an embodiment, when the client cannot establish a control session with the server, the client can establish a communication connection with the shared device based on the Matter protocol, and send an operation instruction corresponding to the control operation of the shared device to the shared device. Since both the client and the shared device have stored the permission information table generated based on the Matter protocol, the client and the shared device can establish a communication connection based on the Matter protocol after verification, so that when the connection between the client and the server is poor or not connected, a local area network without server intervention can be built between the client and the shared device, so that the client can input operation instructions to the shared device through the local area network.

Step S30, in response to that the control session is successfully established with the server, sending the operation instruction to the server.

In an embodiment, when the client successfully establishes a control session with the server, the client directly sends the operation instruction to the server, that is, the client obtains and controls the permission by connecting to the server.

In an embodiment, by sending a permission information table to the client, and establishing the Matter protocol on the client, so that when receiving control operation of the shared device input by the user, the client is controlled to send the operation instruction to the shared device or to the server according to whether a control session is established between the client and the server. The phenomenon that the shared device cannot respond to the client's operation instruction in time when a network failure occurs on the client is avoided.

As an implementation scheme, the hardware architecture of the server can be shown in FIG. 7.

The solution of the embodiment involves the hardware architecture of the server, and the hardware architecture comprises: a processor 101, such as a CPU, a memory 102, and a communication bus 103. Among them, the communication bus 103 is used to realize the connection and communication between these components.

The memory 102 can be a high-speed RAM memory or a stable memory (nonvolatile memory), such as a disk memory. As shown in FIG. 7, the memory 102 as a readable storage medium may comprise a program for controlling a shared device. The processor 101 can call the program for controlling the shared device stored in the memory 102 and perform the following operations:
in response to receiving an operation instruction sent by a client, determining permission information corresponding to the client according to a permission information table; and
converting the permission information into a data model corresponding to a Matter protocol, and sending a control instruction corresponding to the operation instruction to the shared device based on converted permission information.

In an embodiment, the processor 101 can call the program for controlling the shared device stored in the memory 102 and perform the following operations:
in response to that the permission information does not exist in the permission information table, receiving a server application for permission sent by the client;
based on the server application for permission, updating the permission information corresponding to the client in the permission information table; and
determining the permission information corresponding to the client according to the permission information table.

In an embodiment, the processor 101 can call the program for controlling the shared device stored in the memory 102 and perform the following operations:
receiving owner information sent by the shared device;
generating the permission information table according to the owner information; and
sending the permission information table to the shared device and the client.

Based on the hardware architecture of the server based on the communication technology, a third embodiment of the method for controlling the shared device of the present application is provided.

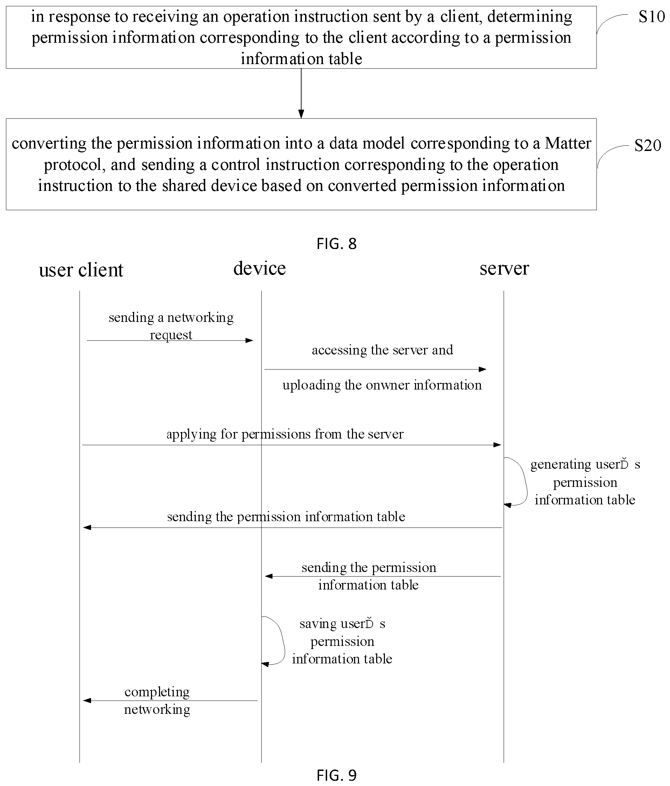

As shown in FIG. 8, in the third embodiment, the method for controlling the shared device comprises the following steps:
Step S10, in response to receiving an operation instruction sent by a client, determining permission information corresponding to the client according to a permission information table.

In an embodiment, when the server and the client successfully establish a control session, the server receives the operation instruction from the client, and the server checks whether there is a device identification and/or user information corresponding to the client pre-stored in the table according to its pre-stored permission information table. When the device identification and/or user information corresponding to the client is checked in the permission information table, it is determined that the client has the control permission of the shared device.

It should be noted that the server will send the pre-stored permission information table to the shared device and the client which the control session is established with.

In an embodiment, if the permission information of the client does not exist in the permission information table, the server application for permission sent by the client is received. The server application for permission is that when the user meets the rules set by the owner, the client applies to the server for the control permission of the shared device. When the server receives the server application for permission sent by the client, based on the user information and/or device identification of the client contained in the server application for permission, the server enters the permission information corresponding to the updated client in the permission information table. After the update is completed, the server returns to the step of determining the permission information corresponding to the client.

Step S20, converting the permission information into a data model corresponding to a Matter protocol, and sending a control instruction corresponding to the operation instruction to the shared device based on converted permission information, enabling the shared device to execute the operation instruction.

In an embodiment, after determining that the client has the control permission of the shared device, the server converts the permission information into a data model corresponding to the Matter protocol. The permission information after the data model conversion comprises the operation permission of various operations in the shared device (such as mode switching control, power on/off control, etc.), and then sends the control instruction corresponding to the operation instruction to the shared device, so that the shared device performs the corresponding operation of the operation instruction sent by the client according to the control instruction sent by the server.

In the technical solution provided in the embodiment, by setting the permission information table on the server and sending it to the shared device and the client, a control session based on the Matter protocol is established between the server, the client and the shared device. When the client is in a networked state, the server receives the operation instruction sent from the client. It is convenient for the owner to check the client and prevent illegal access by clients that do not conform to the verification information stored in the permission information table.

In addition, based on the hardware architecture of the above-mentioned shared device, client and server based on communication technology, an embodiment of the method for controlling the shared device of the present application is provided.

The access flowchart of the shared system composed of the user client, shared device and server is shown in FIG. 9. First, the user client sends a connection request to the shared device, the shared device accesses the server, and uploads the owner information of the user client to the server. Then, when the user needs to use the shared device, the user client sends the server application for permission to the server. After receiving the server application for permission, the server generates the user's permission information table with the owner information, and sends the permission information table to the client and the shared device, so that a control session based on the Matter protocol is established between the server, the client and the shared device. When the shared device receives the permission information table, it saves the permission information table in the memory of the shared device to complete the device networking.

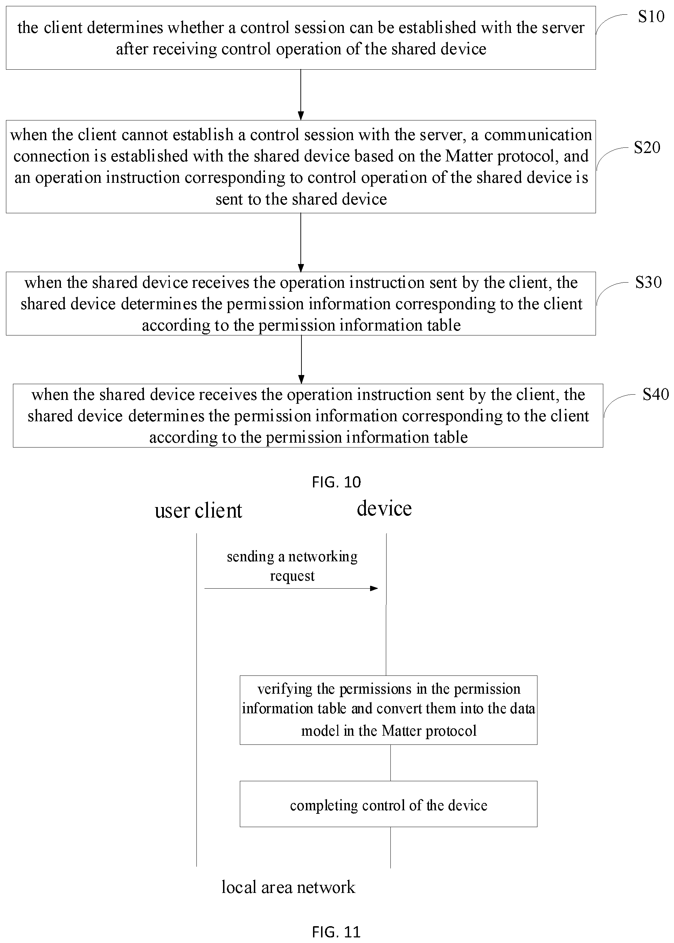

As shown in FIG. 10, in the fourth embodiment, the method for controlling the shared device comprises the following steps:
Step S10, the client determines whether a control session can be established with the server after receiving control operation of the shared device;
Step S20, when the client cannot establish a control session with the server, a communication connection is established with the shared device based on the Matter protocol, and an operation instruction corresponding to control operation of the shared device is sent to the shared device;
Step S30, when the shared device receives the operation instruction sent by the client, the shared device determines the permission information corresponding to the client according to the permission information table;
Step S40, the shared device converts the permission information into a data model corresponding to the Matter protocol, and executes the operation instruction based on converted permission information.

In an embodiment, when the client receives the control operation of the shared device input by the user, it determines whether a control session can be established with the server. If a control session cannot be established with the server, it means that the client is not connected to the network or the network connection is poor; if a control session can be successfully established with the server, it means that the client is connected to the network and/or the network connection is good.

As shown in FIG. 11, FIG. 11 is a schematic flowchart of the local area network communication between the user client and the device. When the client cannot establish a control session with the server, the client connects to the shared device based on the Matter protocol and sends the shared device an operation instruction corresponding to control operation of the shared device input by the user. Since both the client and the shared device store the permission information table generated based on the Matter protocol, the client and the shared device can establish a communication connection based on the Matter protocol after verification, so that when the connection between the client and the server is poor or not connected, a local area network without server intervention can be built between the client and the shared device, so that the client can input operation instructions to the shared device through the local area network.

In an embodiment, when the client cannot establish a control session with the server, the shared device receives the operation instruction sent by the client, and the shared device can verify whether the client has the control permission, and when it is determined that the client has the control permission, it executes the corresponding operation of the operation instruction, thereby avoiding the phenomenon that the shared device cannot respond to the client's operation instruction in time when a network failure occurs on the client.

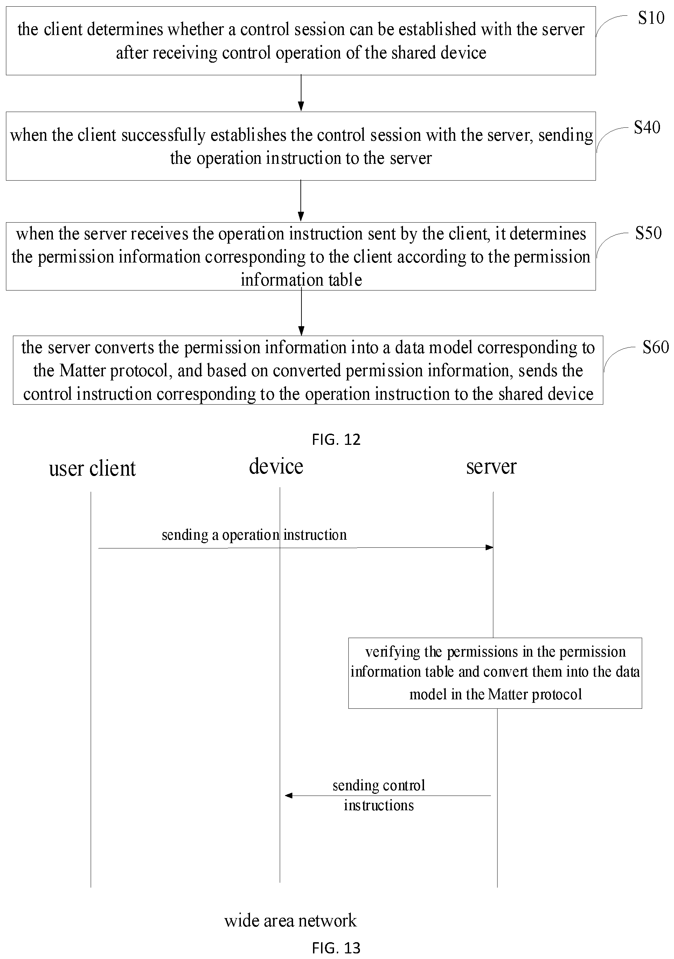

As shown in FIG. 12, in the fifth embodiment, after step S10, the method further comprises:
Step S40, when the client successfully establishes the control session with the server, sending the operation instruction to the server;
Step S50, when the server receives the operation instruction sent by the client, it determines the permission information corresponding to the client according to the permission information table;
Step S60, the server converts the permission information into a data model corresponding to the Matter protocol, and based on converted permission information, sends the control instruction corresponding to the operation instruction to the shared device.

In an embodiment, when the server and the client successfully establish a control session, the server receives an operation instruction from the client, and the server checks whether there is a device identification and/or user information corresponding to the client pre-stored in the table according to the pre-stored permission information table. When the device identification and/or user information corresponding to the client is checked in the permission information table, it is determined that the client has the control permission of the shared device.

As shown in FIG. 13, the server converts the permission information into a data model corresponding to the Matter protocol. The permission information after the data model conversion comprises the operation permission of various operations in the shared device (such as mode switching control, power on/off control, etc.), and then sends the control instruction corresponding to the operation instruction to the shared device, so that the shared device performs the corresponding operation of the operation instruction sent by the client according to the control instruction sent by the server, thereby building a wide area network connection between the user client, the shared device and the server.

In the technical solution provided in the embodiment, when the client is in a networked state, the server receives the operation instructions sent from the client. It is convenient for the owner to check the client and prevent the client that does not match the verification information stored in the permission information table from illegally accessing.

In addition, it can be understood by those skilled in the art in this field that all or part of the processes in the method of the above embodiment can be completed by instructing the relevant hardware through a computer program. The computer program comprises program instructions, and the computer program can be stored in a storage medium, which is a computer-readable storage medium. The program instructions are executed by at least one processor in the server, the shared device and the client to implement the process steps of the embodiment of the above method.

Therefore, the present application also provides a computer-readable storage medium, which stores a program for controlling the shared device, and when the program for controlling the shared device is executed by the processor, the various steps of the method for controlling the shared device described in the above embodiment are implemented.

Among them, the computer-readable storage medium can be a U disk, a mobile hard disk, a read-only memory (ROM), a disk or an optical disk, etc., which can store program codes.

It should be noted that, in this article, the terms "comprise", "comprises" or any other variants thereof are intended to cover non-exclusive inclusion, so that a process, method, article or device comprising a series of elements comprises not only those elements, but also other elements not explicitly listed, or also comprises elements inherent to such process, method, article or device. In the absence of further restrictions, an element defined by the sentence "comprises a..." does not exclude the existence of other identical elements in the process, method, article or device comprising the element.

Through the description of the above implementation methods, those skilled in the art can clearly understand that the above-mentioned embodiment method can be implemented by means of software plus the necessary general hardware platform, of course, it can also be implemented by hardware, but in many cases the former is a better implementation method. Based on such an understanding, the technical solution of the present application is essentially or the part that contributes to the prior art can be embodied in the form of a software product, which is stored in a computer-readable storage medium (such as ROM/RAM, disk, optical disk) as described above, and comprises several instructions for a terminal device (which can be a mobile phone, computer, server, air conditioner, or network device, etc.) to execute the methods described in each embodiment of the present application.

The above are only some embodiments of the present application, and do not limit the scope of the present application thereto. Under the inventive concept of the present application, equivalent structural transformations made according to the description and drawings of the present application, or direct/indirect application in other related technical fields, are comprised in the scope of the present application.

## Claims

1. A method for controlling a shared device, applied to the shared device, **characterized by** comprising:
receiving a permission information table sent by a server;
in response to receiving an operation instruction sent by a client, determining permission information corresponding to the client according to the permission information table; and
converting the permission information into a data model corresponding to a Matter protocol, and executing the operation instruction based on converted permission information.

2. The method for controlling the shared device according to claim 1, wherein the Matter protocol comprises a highest operation permission and a plurality of independent normal operation permissions of the shared device, and a control session is established between the shared device and at least one of the clients under the Matter protocol.

3. The method for controlling the shared device according to claim 1, wherein before the step of receiving the permission information table sent by the server, the method comprises:
receiving a networking request sent by the client;
determining owner information of the client according to the networking request; and
sending the owner information to the server.

4. A method for controlling a shared device, applied to a client, **characterized by** comprising:
in response to receiving a control operation of the shared device, determining whether a control session is able to be established with the server;
in response to that the control session is not able to be established with the server, establishing a communication connection with the shared device based on a Matter protocol, and sending an operation instruction corresponding to the control operation of the shared device to the shared device; or
in response to that the control session is successfully established with the server, sending the operation instruction to the server.

5. The method for controlling the shared device according to claim 4, wherein the step of determining whether the control session is able to be established with the server comprises:
sending a connection request to the server based on a preset frequency;
in response to that a connection success request fed back by the server is received within a preset time, determining that the control session is successfully established with the server; or
in response to that the connection success request fed back by the server is not received within a preset time, determining that the control session is not able to be established with the server.

6. The method for controlling the shared device according to claim 4, wherein before the step of determining whether the control session is able to be established with the server, the method further comprises:
when establishing the control session with the shared device for a first time, sending a networking request to the shared device and sending a server application for permission to the server; and
receiving a permission information table generated and sent by the server according to the server application for permission.

7. A method for controlling a shared device, applied to a server, **characterized by** comprising:
in response to receiving an operation instruction sent by a client, determining permission information corresponding to the client according to a permission information table; and
converting the permission information into a data model corresponding to a Matter protocol, and sending a control instruction corresponding to the operation instruction to the shared device based on converted permission information, enabling the shared device to execute the operation instruction.

8. The method for controlling the shared device according to claim 7, wherein after the step of determining the permission information corresponding to the client according to the permission information table, the method further comprises:
in response to that the permission information does not exist in the permission information table, receiving a server application for permission sent by the client;
based on the server application for permission, updating the permission information corresponding to the client in the permission information table; and
returning to the step of determining the permission information corresponding to the client according to the permission information table.

9. The method for controlling the shared device according to claim 7, wherein before the step of determining the permission information corresponding to the client according to the permission information table, the method further comprises:
receiving owner information sent by the shared device;
generating the permission information table according to the owner information; and
sending the permission information table to the shared device and the client.

10. A shared device, **characterized by** comprising:
A memory;
a processor; and
a program for controlling the shared device stored in the memory and executable on the processor,
wherein the program for controlling the shared device, when executed by the processor, implements steps of a method for controlling the shared device according to any one of claims 1 to 3.

11. A client, **characterized by** comprising:
a memory;
a processor, and
a program for controlling the shared device stored in the memory and executable on the processor,
wherein the program for controlling the shared device, when executed by the processor, implements steps of a method for controlling the shared device according to any one of claims 4 to 6.

12. A server, **characterized by** comprising:
A memory;
a processor; and
a program for controlling the shared device stored in the memory and executable on the processor,
wherein the program for controlling the shared device, when executed by the processor, implements steps of a method for controlling the shared device according to any one of claims 7 to 9.

13. A computer-readable storage medium, **characterized in that** a program for controlling a shared device is stored in the computer-readable storage medium, and the program for controlling the shared device, when executed by a processor, implements steps of a method for controlling the shared device according to any one of claims 1 to 9.
